Europäisches Patentamt

European Patent Office

Office européen des brevets

(19)

(11) Publication number : **0 442 859 A1**

(12) # EUROPEAN PATENT APPLICATION

(21) Application number : 91850025.7

(51) Int. Cl.⁵ : **F15B 15/08**

(22) Date of filing : 05.02.91

(30) Priority : 09.02.90 SE 9000479

(43) Date of publication of application :
21.08.91 Bulletin 91/34

(84) Designated Contracting States :
AT BE CH DE DK ES FR GB GR IT LI LU NL SE

(71) Applicant : Granbom, Bo
Kungsgatan 10
S-736 00 Kungsör (SE)

(72) Inventor : Granbom, Bo
Kungsgatan 10
S-736 00 Kungsör (SE)

(74) Representative : Onn, Thorsten et al
AB Stockholms Patentbyra Zacco & Bruhn
P.O. Box 3129
S-103 62 Stockholm (SE)

(54) An arrangement for attaching a rail to a piston-cylinder type control device.

(57) An attachment arrangement for attaching an object (4), for instance a rail, such as a support rail, brake rail, mounting rail or the like, onto a piston-cylinder control device (1), the cylinder of which has two undercut grooves (3) extending along at least one of its sides, these grooves being parallel with one another and therewith also with the cylinder axis. The object (4) is provided with two parallel ridges or keys (5), each of which is intended for locking coaction with a respective undercut groove (3). At least one wedge-shaped, elongated device (6) is arranged between the outside of the cylinder (1) and the object (4), in connection with each pair of coacting grooves (3) and ridges (4). Means (9) are provided for moving the wedge-shaped devices (6) in a direction transversely to the cylinder axis, so that these devices (6), in engagement with oblique surfaces (7) on the cylinder (1) and/or the rail (4), will fixate the rail in a position parallel with the cylinder axis.

EP 0 442 859 A1

FIG. 1

## AN ARRANGEMENT FOR ATTACHING A RAIL TO A PISTON-CYLINDER TYPE CONTROL DEVICE

The present invention relates to an arrangement for attaching a rail to a piston-cylinder control device, for instance an "Origa"-type piston-cylinder device, comprising a cylinder which is provided with two undercut grooves along at least one of its sides, said grooves extending parallel with one another and thus also with the cylinder axis. This rail may form a cylinder support, a brake rail for retardation of the piston movable in the cylinder, a mounting rail, a rail for steering a toothed belt which is used many times for controlling piston movement, and like rails.

It is known, for instance from Swedish Patent Specification No. 8402926-2 and European Patent Specification No. EP-A-0294350, to attach objects to a piston-cylinder device of the aforesaid kind, for instance an "Origa cylinder". In this case, the attachment is effected with the aid of two strips provided with pronounced ridges or profiles which engage in corresponding grooves. The object positioned adjacent the piston-cylinder device is secured to said device, by screwing the strips against one another.

Cylinders of the aforedescribed kind are produced by press extrustion, as are also the aforesaid strips. It is not possible to achieve great precision by extrusion, and the configuration and position of the grooves and the ridges along the cylinder and along the strips respectively will vary. The guide rail, which is discussed in the aforesaid European Patent Application No. EP-A-0294350, is often found to be warped subsequent to extrusion. Consequently, in the aforesaid examples, it is not possible to achieve precise parallelity and that a slide moving along the guide rail will "wobble" as a result thereof.

The object of the present invention is to alleviate the aforesaid deficiencies when fitting an object, for instance a rail, to the cylinder of a piston-cylinder device of the aforedescribed kind. This object is achieved with the inventive device having the characteristic features set forth in the following Claims.

The invention will now be described in more detail with reference to an exemplifying embodiment thereof illustrated in the accompanying drawings, in which Figure 1 is a schematic partial section of a cylinder fitted with a brake rail, Figure 2 is a schematic sectional view of a cylinder having a support rail fitted thereto in a different fashion, Figure 3 is a part section of a further embodiment of the invention, and Figure 4 illustrates a further alternative attachment arrangement.

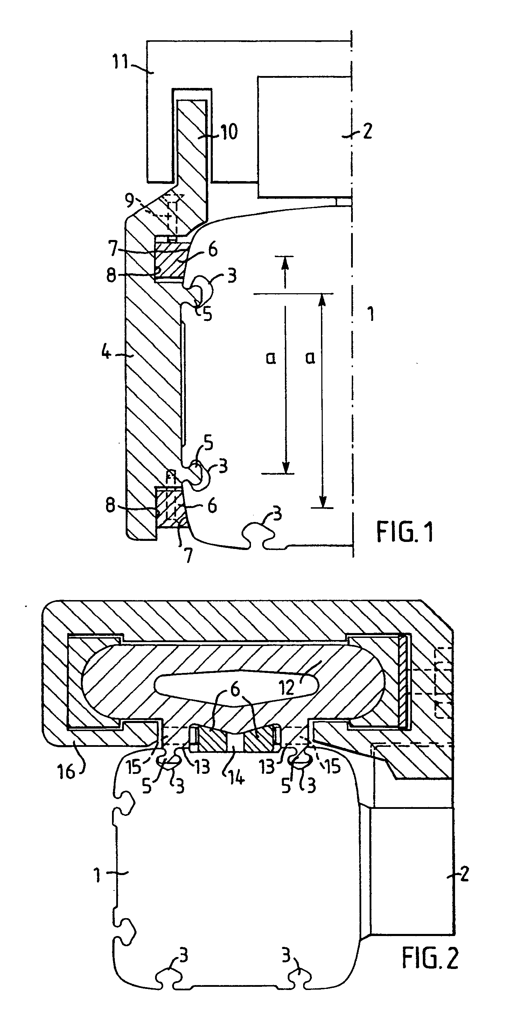

The Figures illustrate very schematically a section through a cylinder 1, wherein only half said section is shown in Figure 1. The piston-cylinder device is a pneumatically operated device and the piston is provided with a dogging element 2 which extends laterally through a slot provided in the cylinder wall, said slot being sealed by means of a sealing band. This type of rodless piston-cylinder device is well known to the art and will not therefore be described in detail here. As will be seen from the Figures, each of three sides of the cylinder 1 is provided respectively with two undercut grooves 3 which extend parallel with one another and therewith also with the cylinder axis.

In Figure 1, there is shown a support rail 4 provided with two ridges or keys 5 which extend parallel with one another along the rail. The ridges 5 are profiled in a manner such as to engage beneath the undercut of the grooves 3 when fitting the rail, which is achieved by pushing the rail from one end along the cylinder. The length of the rail corresponds to the length of the piston and therewith the length of stroke of the dogging element 2. The device also includes two elongated devices 6 which have a wedge-shaped cross-section and the oblique surfaces of which rest against the bevelled mantle surface of the cylinder 1 (at 7) and the opposing straight surfaces of which abut a bevelled part or a recessed part 8 of the support rail 4. Figure 1 illustrates two different examples of moving the wedge-shaped devices into locking engagement. In the upper part of the Figure, there is shown a screw 9 which is screwed into the support rail and by means of which the upper wedge-shaped device 6 can be urged towards the other wedge-shaped device. Another possibility is to displace the wedge-shaped device 6 shown at the bottom of the Figure. In this case, the wedge-shaped device 6 is provided with a through-passing hole through which screws 9 (only one is shown) extend and screw into the support rail, thereby enabling the wedge-shaped device 6 to be drawn in towards the other wedge-shaped device, by means of the screws. It will be understood that a number of screws 9 are disposed along the length extension of the wedge-shaped devices, so as to uniformly distribute the clamping forces. This also applies to the embodiments illustrated in Figures 2, 3 and 4.

By thus urging the wedge-shaped devices 6 towards one another, the support rail will be urged outwards, as a result of the wedging action, and be "suspended" from the ridges or keys 5 engaging the grooves 3. The support rail is therewith clamped with the aid of well-defined and relatively wide abutment surfaces 8 and at 7, thereby aligning the support rail precisely with the cylinder axis. It will be understood that the material at the edges of the grooves, and also the material in the ridges, will be deformed elastically and possibly also plastically, when the support rail is clamped firmly to the piston-cylinder device.

The illustrated support rail 4, which forms no part of the invention, is intended to support the dogging element when said element is subjected to load transversely of the cylinder axis, to which end the dogging element 2 is provided with a yoke 11 which grips around a support flange 10 on the rail 4.

Figure 2 illustrates another embodiment of the inventive attachment arrangement applied to a somewhat differently configured support rail. As with the embodiment earlier described with reference to Figure 1, the cylinder 1 is provided with grooves 3 and the support rail 12 with corresponding ridges or keys 5, which are disposed on spacer strips 13 which define therebetween a space or channel 14. The bottom of the channel 14 in the support rail 12 has a V-shaped configuration, as shown in Figure 2. The channel 14 accommodates two wedge-shaped devices 6, the oblique surfaces of which abut the bottom of the channel 14 and the straight surfaces of which abut a planar part of the cylinder mantle. The spacer strips 13 have provided therein threaded holes 15 intended to receive screws by means of which the wedge-shaped devices 6 can be urged towards one another, therewith clamping the rail 12 in a manner corresponding to that described with reference to Figure 1.

The Figure 2 embodiment also includes a runner 16 which is guided by the rail and which is connected to the dogging element 2. This runner and associated elements forms no part of the invention.

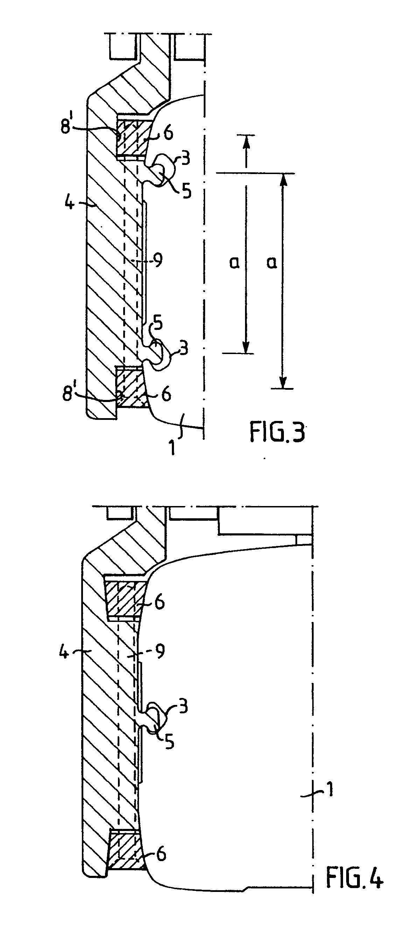

Figure 3 is a part sectional view of a further embodiment, in which the wedge-shaped devices 6 have oblique surfaces on two mutually opposite sides. These oblique surfaces act against oblique surfaces on the cylinder mantle and also against oblique surfaces or recesses 8' on the object 4 to be attached to the piston-cylinder device. In this case, through-passing holes are drilled between the recesses and the upper wedge-shaped device 6 is provided with holes which correspond to the threaded bores. The lower wedge-shaped device of this embodiment has through-passing bores. Long screws 9 extend from the lower wedge-shaped device 6, with the heads of the screws resting on said device and mesh with screw threads on the upper wedge-shaped device. These screws 9 enable the wedge-shaped devices to be drawn together and therewith lock the object 4 to the piston-cylinder device in the same manner as that described with references to Figures 1 and 2.

Another embodiment of the inventive attachment arrangement is illustrated in Figure 4. In the case of this embodiment, the cylinder 1 is provided solely with one groove 3 which extends along the side of the cylinder, and the object 4 with a corresponding ridge 5. The embodiment illustrated in Figure 4 employs two wedge-shaped devices 6 corresponding to the devices illustrated in Figure 3, with through-passing screws 9. For reasons of mechanical strength, this embodiment is not as suitable as the embodiment described with reference to Figures 1-3 and presents problems in aligning the object attached thereto. The embodiment is technically feasible, however.

It will be understood that the inventive attachment arrangement can be applied with all types of control piston-cylinder devices, both with rodless piston-cylinder devices and with those which include a piston rod, and irrespective of whether the piston-cylinder devices are hydraulic, pneumatic or electrical devices, or cable devices or belt devices or magnetic piston devices. Although the aforedescribed embodiments have included a support strip, it will be understood that this strip can be replaced by any type of device or means to be attached to the cylinder. The undercut grooves 3 and the ridges or keys 5 may also have other shapes than those illustrated and described. The wedge-shaped devices 6 may comprise elongated wedge-shaped strips, having a length, for instance, corresponding to the object to be attached to the cylinder, or may have the form of short strips, for instance 20 cm, placed one after the other. It is also conceivable, of course, to provide short wedge-shaped strips or pieces for each screw, although such an arrangement would be more complicated from the aspect of assembly. Similarly, the wedge-shaped devices 6 are positioned differently in the described embodiments and are also moved in mutually different ways. It is pointed out in this respect that the embodiments illustrated in Figures 1 and 3 provide a very long and effective leaver arm $\underline{a}$ which counteracts lateral moments of force on the support rail attachment, irrespective of whether the wedge-shaped devices are moved in the manner illustrated at the top of Figure 1 or at the bottom of said Figure. This lever arm is relatively short in the case of the Figure 2 embodiment.

## Claims

1. Means for attaching an object (4), for instance a rail, such as a support rail, brake rail, mounting rail or the like to a piston-cylinder control device (1), the cylinder of which has provided along at least one side thereof two undercut grooves (3) which extend parallel with one another and also with the cylinder axis, **characterized** in that the object (4) is provided with two parallel ridges or keys (5) each intended for locking coaction with a respective undercut groove (3) ; in that at least one elongated device (3) of wedge-shaped cross-section is located between the outer surface of the cylinder (1) and connects with each pair of coacting grooves (3) and ridges (5) ; and in that means (9) are provided for displacing the wedge-shaped devices (6) in a direction transversal to the cylinder axis such as to bring the wedge-shaped devices (6) into engagement with oblique surfaces (7) on the cylinder (1) and/or the rail (4) and therewith fixate the rail in a position parallel with the cylinder axis.

2. An attachment arrangement according to Claim 1, **characterized** in that respective wedge-shaped devices (6) are located externally of mutually coacting grooves (3) and ridges (5).

3. An attachment arrangement according to Claim 1, **characterized** in that respective wedge-shaped devices (6) are located inwardly of coacting grooves (3) and ridges (5).

4. An attachment arrangement according to any one of Claims 1-3, **characterized** in that the means (9) for displacing the wedge-shaped devices (6) are screws.

5. An attachment arrangement according to Claim 1 or 2, **characterized** in that the means for displacing the wedge-shaped devices (6) have the form of screws (9) which act between the two wedge-shaped devices (6) in a manner to pull said devices towards one another.

6. An attachment arrangement for attaching an object (4), for instance a rail, such as a support rail, brake rail, mounting rail or the like, along at least one side of a piston-cylinder control device (1), the cylinder of which is provided with an undercut groove (3) which extends parallel with the cylinder axis, **characterized** in that the object (4) is provided with a ridge or key (5) intended for locking coaction with the undercut groove (3) ; in that an elongated device (6) of wedge-shaped cross-section is arranged between the outer surface of the cylinder (1) and the object (4) on either side of the groove (3) and the ridge (4) ; and in that means (9) are provided for moving the wedge-shaped devices (6) in a direction transversely to the cylinder axis so that said devices (6), in engagement with oblique surfaces (7) on the cylinder (1) and/or the rail (4), will fixate said rail in a position in which said rail is parallel with the cylinder axis.

7. An attachment arrangement according to Claim 6, **characterized** in that the means (9) for moving the wedge-shaped devices (6) are screws.

8. An attachment arrangement according to Claim 6 or 7, **characterized** in that the means for moving the wedge-shaped devices (6) have the form of screws (9) which act between the two devices in a manner to pull said devices towards one another.

FIG. 1

FIG. 2

FIG.3

FIG.4

7

European Patent Office

**EUROPEAN SEARCH REPORT**

Application Number

EP 91 85 0025

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 333 680 (B. GRANBOM) <br> * column 2, lines 26-35; figures 1,3 * <br> --- | 1,3-5 | F 15 B 15/08 |
| A | EP-A-0 283 694 (KNORR-BREMSE) <br> * column 8, lines 23-26; figure 5a * <br> ----- | 6-8 | |
| | | | **TECHNICAL FIELDS SEARCHED (Int. Cl.5)** <br><br> B 23 Q <br> F 15 B <br> F 16 B |

The present search report has been drawn up for all claims

| Place of search | Date of completion of the search | Examiner |
|---|---|---|
| BERLIN | 17-05-1991 | WESTERMAYER W G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)